# EUROPÄISCHE PATENTSCHRIFT

(11) **EP 1 674 776 B1**
(45) Veröffentlichungstag und Bekanntmachung des Hinweises auf die Patenterteilung: **10.10.2007**
(21) Anmeldenummer: 05025839.1
(22) Anmeldetag: 26.11.2005
(51) Int. Cl.: F16K 31/06

(54) **Elektromagnetventileinrichtung**
Electromagnetic valve
Soupape électromagnétique

(30) Priorität: 23.12.2004 DE 102004061955
(43) Veröffentlichungstag der Anmeldung: 28.06.2006
(73) Patentinhaber: LuK Lamellen und Kupplungsbau Beteiligungs KG, 77815 Bühl (DE)
(72) Erfinder: Grethel, Marco, 77830 Bühlertal (DE); Stehr, Reinhard, 77815 Bühl (DE)

(56) Entgegenhaltungen:
- WO-A-02/43083
- DE-A1- 10 044 486
- DE-A1- 10 208 899
- DE-A1- 19 904 901

## Beschreibung

Die Erfindung betrifft eine Elektromagnetventileinrichtung, insbesondere eine Hydraulikventileinrichtung, mit einem Elektromagnetelement, das aus einem unbestromten eingefahrenen Zustand in einen bestromten ausgefahrenen Zustand bewegbar ist, wobei der Hub des Elektromagnetelements aus seinem eingefahrenen Zustand in seinen ausgefahrenen Zustand im Bereich bei im Wesentlichen konstanter Magnetkraft als Konstantkraftarbeitshub bezeichnet wird und normalerweise im Stand der Technik durch eine Hubbegrenzung um einen so genannten Leerhub reduziert ist, in dem die Magnetkraft über dem Hub nicht konstant ist, sondern abfällt.

Bei bekannten elektrohydraulischen Proportionaldruckventilen (z.B. DE 19904901) ist der Arbeitshub des Elektromagnetelements auf den Bereich mit konstantem Kraftverlauf beschränkt, um eine einem Eingangssignal, beispielsweise dem Magnetstrom, proportionale Druckfunktion des Gesamtventils über den gesamten Druckbereich darstellen zu können.

Aufgabe der Erfindung ist es, eine Elektromagnetventileinrichtung, insbesondere eine Hydraulikventileinrichtung, mit einem Elektromagnetelement, das aus einem unbestromten eingefahrenen Zustand in einen bestromten ausgefahrenen Zustand bewegbar ist, wobei der Hub des Elektromagnetelements aus seinem eingefahrenen Zustand in seinen ausgefahrenen Zustand im Bereich bei im Wesentlichen konstanter Magnetkraft als Konstantkraftarbeitshub bezeichnet wird und normalerweise im Stand der Technik durch eine Hubbegrenzung um einen so genannten Leerhub reduziert ist, in dem die Magnetkraft über dem Hub nicht konstant ist, sondern abfällt, zu schaffen, die kostengünstig herstellbar ist und weniger Bauraum aufweist als herkömmliche Elektromagnetventileinrichtungen.

Die Aufgabe ist bei einer Elektromagnetventileinrichtung, insbesondere einer Hydraulikventileinrichtung, zum Beispiel einem elektrohydraulischen Proportionaldruckventil, mit einem Elektromagnetelement, das aus einem unbestromten eingefahrenen Zustand in einen bestromten ausgefahrenen Zustand bewegbar ist, wobei der Hub des Elektromagnetelements aus seinem eingefahrenen Zustand in seinen ausgefahrenen Zustand im Bereich bei im Wesentlichen konstanter Magnetkraft als Konstantkraftarbeitshub bezeichnet wird und normalerweise im Stand der Technik durch eine Hubbegrenzung um einen so genannten Leerhub reduziert ist, in dem die Magnetkraft über dem Hub nicht konstant ist, sondern abfällt, dadurch gelöst, dass die Hubbegrenzung des Elektromagnetelements so variiert wird, dass sowohl der Konstantkraftarbeithub als auch der Leerhub als Arbeitshub des Elektromagnetelements genutzt werden. Bei dem Elektromagnetelement handelt es sich vorzugsweise um einen Proportionalmagneten, der einen Anker mit einem Stößel und eine Spule umfasst und dazu dient, einen Ventilkolben zu verschieben, wenn die Spule bestromt wird. Wenn der Arbeitshub des Elektromagnetelements um den Leerhub erweitert wird, dann können in der Elektromagnetventileinrichtung größere Kolbenhübe und damit Öffnungsquerschnitte zur Absenkung des Rückstaudrucks realisiert werden. Durch die Nutzung des Leerhubs kann die Hubarbeit im Betrieb der Elektromagnetventileinrichtung reduziert werden. Dabei wird gemäß der vorliegenden Erfindung bewusst der Nachteil einer gegenüber der herkömmlichen Auslegung reduzierten und nicht konstanten Magnetkraft im Leerhub in Kauf genommen.

Ein bevorzugtes Ausführungsbeispiel der Elektromagnetventileinrichtung ist dadurch gekennzeichnet, dass ein Ruhepunkt des Magnetelements im unbestromten Zustand so ausgelegt ist, dass ein durch Bestromung des Magnetelements eingeleiteter Hub von dem Ruhepunkt zu einem minimalen Arbeitspunkt für alle Betriebszustände (Volumenströme und Viskositäten) sichergestellt ist. Durch diese Auslegung wird beispielsweise ein sicheres Einfahren in den Konstantkraftbereich (Proportionalbereich) und ordnungsgemäßer Betrieb der Elektromagnetventileinrichtung bei kleinen Hüben gewährleistet.

Ein weiteres bevorzugtes Ausführungsbeispiel der Elektromagnetventileinrichtung ist dadurch gekennzeichnet, dass ein Startstrom des Elektromagnetelements beim Einschalten der Elektromagnetventileinrichtung größer als der Strom beim Erreichen des minimalen Arbeitspunkts, jedoch kleiner als ein maximal zulässiger Strom ist. Dadurch wird sichergestellt, dass das Elektromagnetelement zuverlässig aus seiner durch den Ruhepunkt definierten Ruhelage in den minimalen Arbeitspunkt und damit an den Beginn des Arbeitskraftbereichs bewegt wird.

Ein weiteres bevorzugtes Ausführungsbeispiel der Elektromagnetventileinrichtung ist dadurch gekennzeichnet, dass der minimale Arbeitspunkt im Bereich des Konstantkraftarbeitshubs des Elektromagnetelements liegt. Der minimale Arbeitspunkt liegt vorzugsweise, aber nicht notwendiger Weise auf einem Konstantkraftast der Magnetkennlinie.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
Figur 1 ein kartesisches Koordinatendiagramm, in dem die Magnetkraft über dem Magnethub bei konstantem Strom in Form einer Kennlinie eines Proportionalmagneten aufgetragen ist;
Figur 2eine Kennlinie wie in Figur 1 mit erweitertem Arbeitshub und
Figur 3ein kartesisches Koordinatensystem, in dem die Druckkraft eines Druckbegrenzungsventils und die Magnetkraft über dem Weg eines Ventilkolbens, also dem Arbeitshub des Magneten, bei verschiedenen elektrischen Strömen aufgetragen ist.

Im Rahmen der vorliegenden Erfindung wurden Überlegungen angestellt, um die Kosten und den Bauraum von Ventilmagneten von elektrohydraulischen Druckventilen zu reduzieren. Dabei wurden insbesondere für eine Wankstabilisierung in der Fahrwerkshydraulik Lösungen gesucht, wie die benötigte Hubarbeit des Magneten so gering wie möglich gehalten werden kann. Im betriebswarmen Zustand reichen in der Regel kleine Wege aus, um an den Steuerkanten eines Druckventils die gewünschten Drücke einzustellen. Sollen aber bei großen Volumenströmen und tiefen Öltemperaturen (hohe Viskosität des Öls) sehr kleine Rückstaudrücke realisiert werden, dann ist es erforderlich, große Querschnitte durch das Ventil freizugeben. Diese Forderung steht in direktem Zusammenhang mit großen Ventilwegen. Die großen Ventilwege führen bei einer konventionellen Auslegung zu einer erheblichen Verteuerung und Vergrößerung des verwendeten Magneten.

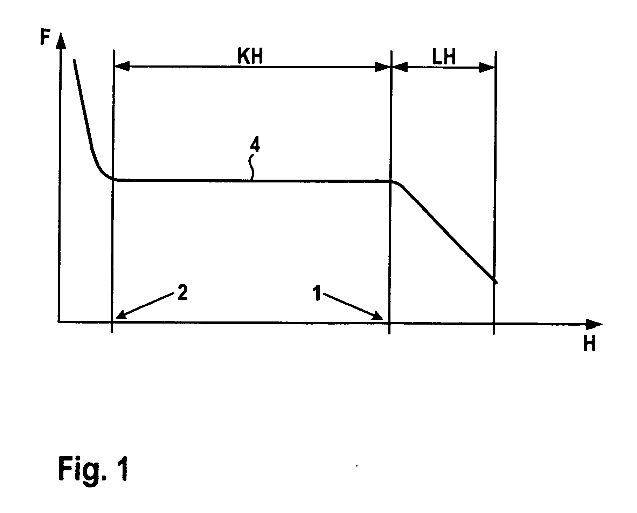

In Figur 1 ist die Magnetkraft F über den Magnethub H bei einem konstanten Strom in Form einer so genannten Kraft/Weg-Kennlinie eines Proportionalmagneten dargestellt. Der Magnet weist vorzugsweise einen Anker mit einem Stößel auf, wobei der Stößel einen Ventilkolben verschieben kann. Der vollständig eingefahrene Zustand des Magnetstößels ist mit 1 bezeichnet. Der vollständig ausgefahrene Zustand des Magnetstößels ist mit 2 bezeichnet. Durch eine Hubbegrenzung wird bei herkömmlichen Magnetventilen sichergestellt, dass für den Arbeitshub des Magneten nicht der komplette Hub des Magneten, sondern nur ein Konstantkraftarbeitshub KH genutzt wird, in dem die Magnetkraft F konstant ist. Ein so genannter Leerhub LH, in dem die Magnetkraft F über dem Hub H abfällt, wird bei herkömmlichen Magnetventilen für Druckventile nicht für den Arbeitshub genutzt.

Die kosten- und bauraumbestimmende Hubarbeit ist in Figur 1 durch die Fläche unter der Kennlinie 4 im Konstantkrafthub KH gegeben. Wenn nun der Arbeitshub um den Leerhub LH erweitert wird, dann können größere Kolbenwege und damit größere Öffnungsquerschnitte im Ventil zur Absenkung des Rückstaudrucks realisiert werden.

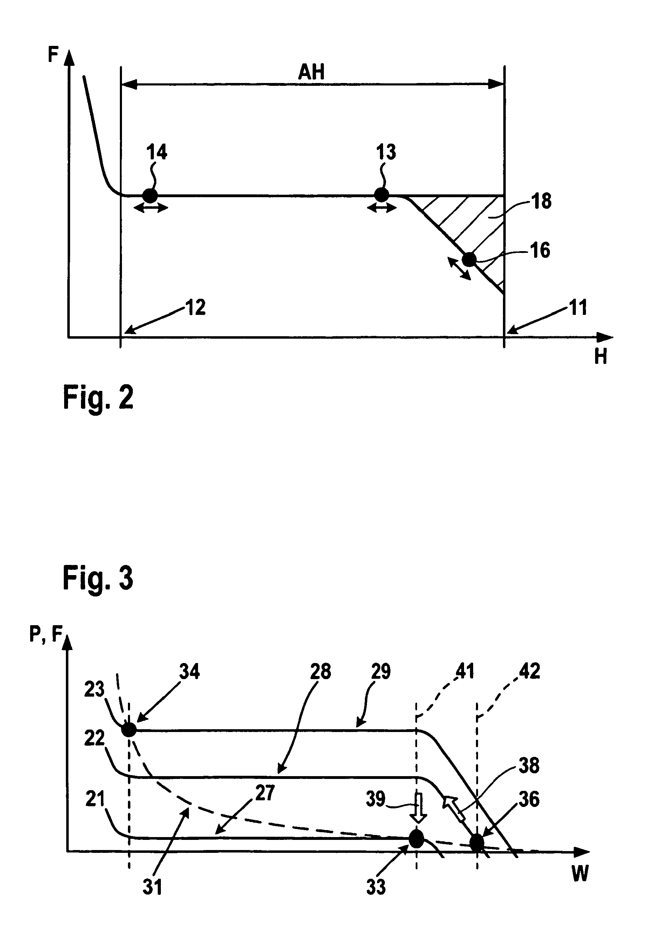

In Figur 2 ist eine Kraft/Weg-Kennlinie eines erfindungsgemäßen Elektromagnetventils dargestellt, wobei sowohl der Konstantkrafthub KH als auch der Leerhub LH (siehe Figur 1) für den Arbeitshub AH genutzt werden. Der vollständig eingefahrene Zustand des Magnetstößels ist mit 11 bezeichnet. Der vollständig ausgefahrene Zustand des Magnetstößels ist mit 12 bezeichnet. Ein minimaler Arbeitspunkt, beispielsweise für die Druckbegrenzungsfunktion, ist mit 13 bezeichnet. Ein maximaler Arbeitspunkt ist mit 14 bezeichnet. Ein Ruhepunkt ist mit 16 bezeichnet. Der Vorteil der in Figur 2 dargestellten Kennlinie liegt in der Reduktion der Hubarbeit durch die Nutzung des fallenden Kennlinienastes, wie durch die schraffierte Fläche 18 angedeutet ist. Ein Nachteil ist eine gegenüber der üblichen Auslegung reduzierte und nicht konstante Magnetkraft F in dem erweiterten Arbeitsbereich.

In Figur 3 ist die Druckkraft P beziehungsweise die Magnetkraft F eines erfindungsgemäßen Elektromagnetventils über dem Hub beziehungsweise Weg W eines Schiebers oder Ventilkolbens aufgetragen. Der Weg wird auch als Schieberweg bezeichnet. Bei dem Elektromagnetventil handelt es sich zum Beispiel um ein Druckbegrenzungsventil. In Figur 3 sind für verschiedene elektrische Ströme 21, 22, 23 verschiedene Magnetkennlinien 27, 28, 29 dargestellt. Die Stärke der elektrischen Ströme nimmt von 21 nach 23 hin zu. Außerdem ist in Figur 3 eine Ventilkennlinie 31 für einen konstanten Volumenstrom bei ansteigendem Druck dargestellt. Der minimale Arbeitspunkt für die Druckbegrenzungsfunktion ist in Figur 3 mit 33 bezeichnet. Der maximale Arbeitspunkt für die Druckbegrenzungsfunktion ist in Figur 3 mit 34 bezeichnet. Der Ruhepunkt ist in Figur 3 mit 36 bezeichnet.

In der Darstellung der Figur 3 ist zu erkennen, dass der vermeintliche Nachteil der reduzierten und nicht konstanten Magnetkraft zu keiner Beeinträchtigung der Ventilfunktion führt. Im nicht bestromten Zustand wird der Ruhepunkt 36 auf der Ventilkennlinie 31 so ausgelegt, dass für alle Betriebszustände (Volumenströme und Viskositäten) ein durch Bestromung des Magneten eingeleiteter Weg vom Ruhepunkt 36 zu dem minimalen Arbeitspunkt 33 des erfindungsgemäßen Elektromagnetventils sichergestellt ist, wie durch Pfeile 38, 39 angedeutet ist. Dabei ist der Startstrom 22 beim Einschalten größer als der Strom 21 beim Erreichen des minimalen Arbeitspunkts 33, also des minimal zu regelnden Drucks, jedoch kleiner als der maximal zulässige Strom 23. Der Bereich des Leerhubs LH (siehe Figur 1) ist in Figur 3 durch zwei gestrichelte Linien 41, 42 angedeutet, zwischen denen die Magnetkraft F abfällt. Der minimale Arbeitspunkt 33 liegt vorzugsweise in dem Bereich der Magnetkennlinien 27 bis 29, in dem die Magnetkraft F konstant ist.

Durch die Erfindung wird ein Proportionalventil, insbesondere Druckbegrenzungsventil, mit einem erweiterten Arbeitsbereich geschaffen, das den nicht konstanten Kennlinienbereich eines Proportionalmagneten ausnutzt. Dadurch kann auf den Einsatz großer und teuerer Magnete verzichtet werden.

### Bezugszeichenliste

- 1.: eingefahrener Zustand
- 2.: ausgefahrener Zustand
- 4.: Kennlinie
- 11.: eingefahrener Zustand
- 12.: ausgefahrener Zustand
- 13.: minimaler Arbeitspunkt
- 14.: maximaler Arbeitspunkt
- 16.: Ruhepunkt
- 18.: schraffierte Fläche
- 21.: Strom
- 22.: Strom
- 23.: Strom
- 27.: Magnetkennlinie
- 28.: Magnetkennlinie
- 29.: Magnetkennlinie
- 31.: Ventilkennlinie
- 33.: minimaler Arbeitspunkt
- 34.: maximaler Arbeitspunkt
- 36.: Ruhepunkt
- 38.: Pfeil
- 39.: Pfeil
- 41.: gestrichelte Linie
- 42.: gestrichelte Linie

## Patentansprüche

1. Elektromagnetventileinrichtung, insbesondere Hydraulikventileinrichtung, mit einem Elektromagnetelement, das aus einem unbestromten eingefahrenen Zustand in einen bestromten ausgefahrenen Zustand bewegbar ist, wobei der Hub des Elektromagnetelements aus seinem eingefahrenen Zustand (1;11) in seinen ausgefahrenen Zustand (2;12) im Bereich bei im Wesentlichen konstanter Magnetkraft als Konstantkraftarbeitshub (KH) bezeichnet wird und durch eine Hubbegrenzung um einen so genannten Leerhub (LH) reduziert ist, in dem die Magnetkraft (F) über dem Hub (H) nicht konstant ist, sondern abfällt, **dadurch gekennzeichnet, dass** die Hubbegrenzung des Elektromagnetelements so variiert ist, dass sowohl der Konstantkraftarbeitshub (KH) als auch der Leerhub (LH) als Arbeitshub (AH) des Elektromagnetelements genutzt werden.

2. Elektromagnetventileinrichtung nach Anspruch 1, **dadurch gekennzeichnet, dass** ein Ruhepunkt (36) des Magnetelements im unbestromten Zustand so ausgelegt ist, dass ein durch Bestromung des Magnetelements eingeleiteter Hub von dem Ruhepunkt (36) zu einem minimalen Arbeitspunkt (33) für alle Betriebspunkte sichergestellt ist.

3. Elektromagnetventileinrichtung nach Anspruch 2, **dadurch gekennzeichnet, dass** ein Startstrom (22) des Elektromagnetelements beim Einschalten der Elektromagnetventileinrichtung größer als der Strom (21) beim Erreichen des minimalen Arbeitspunkts (33), jedoch kleiner als ein maximal zulässiger Strom (23) ist.

4. Elektromagnetventileinrichtung nach Anspruch 2 oder 3, **dadurch gekennzeichnet, dass** der minimale Arbeitspunkt (33) im Bereich des Konstantkraftarbeitshubs des Elektromagnetelements liegt.

## Claims

1. Electromagnetic valve device, in particular a hydraulic valve device, having an electromagnet element that is movable from an unpowered, retracted state to a powered, extended state, the stroke of the electromagnet element from its retracted state (1; 11) to its extended state (2; 12) being designated in the range with substantially constant magnetic force as the constant force working stroke (KH), and being reduced by a stroke limitation by the amount of a so-called idle stroke (LH), in which the magnetic force (F) is not constant over the length of the stroke (H) but decreases, **characterized in that** the stroke limitation of the electromagnet element is varied in such a way that both the constant force working stroke (KH) and the idle stroke (LH) are used as working stroke (AH) of the electromagnet element.

2. Electromagnetic valve device according to Claim 1, **characterized in that** a quiescent point (36) of the magnet element in the unpowered state is designed so that a stroke from the quiescent point (36) to a minimum operating point (33) initiated by applying current to the magnet element is ensured for all operating states.

3. Electromagnetic valve device according to Claim 2, **characterized in that** a starting current (22) of the electromagnet element when the electromagnetic valve device is turned on is greater than the current (21) when the minimum operating point (33) is reached, but smaller than a maximum permissible current (23).

4. Electromagnetic valve according to Claim 2 or 3, **characterized in that** the minimum operating point (33) is located in the range of the constant force working stroke of the electromagnet element.

## Revendications

1. Soupape électromagnétique, plus particulièrement soupape hydraulique comprenant un élément d'électroaimant mobile entre un état rentré non alimenté en courant électrique et un état sorti alimenté en courant électrique, où la course de l'élément d'électroaimant entre son état rentré (1 ; 11) et son état sorti (2 ; 12) est décrite dans la plage par une force magnétique essentiellement constante comme course de travail à force constante (KH), et est réduite par une limitation de course au niveau de ce que l'on appelle une course à vide (LH), dans laquelle la force magnétique (F) n'est pas constante sur la course (H), mais baisse, **caractérisée en ce que** la limitation de course de l'élément d'électroaimant varie de telle sorte que la course de travail à force constante (KH) et la course à vide (LH) sont utilisées comme course de travail (AH) de l'élément électromagnétique.

2. Soupape électromagnétique selon la revendication 1, **caractérisée en ce qu'**un point de repos (36) de l'élément magnétique dans l'état non alimenté est conçu de manière à ce qu'une course due à l'alimentation de l'élément d'électroaimant est garantie du point de repos (36) à un point de travail minimal (33) pour tous les points de fonctionnement.

3. Soupape électromagnétique selon la revendication 2, **caractérisée en ce qu'**un courant de départ (22) de l'élément d'électroaimant est plus élevé à la mise sous tension de la soupape électromagnétique que le courant (21) pour lequel le point de travail minimal (33) est atteint, mais toutefois inférieur à un courant (23) maximal autorisé.

4. Soupape électromagnétique selon l'une des revendications 2 ou 3, **caractérisée en ce que** le point de travail minimal (33) est situé dans la plage de la course de travail à force constante de l'élément d'électroaimant.
